(19) Europäisches Patentamt
European Patent Office
Office européen des brevets

(11) Veröffentlichungsnummer: **0 046 561**
**A2**

# (12) EUROPÄISCHE PATENTANMELDUNG

(21) Anmeldenummer: **81106380.9**

(22) Anmeldetag: **17.08.81**

(51) Int. Cl.³: **C 08 F 222/20**
C 08 F 220/04, C 09 D 3/74

(30) Priorität: **22.08.80 DE 3031655**

(43) Veröffentlichungstag der Anmeldung:
**03.03.82 Patentblatt 82/9**

(84) Benannte Vertragsstaaten:
**AT BE CH DE FR GB IT LI NL SE**

(71) Anmelder: **HOECHST AKTIENGESELLSCHAFT**
**Postfach 80 03 20**
**D-6230 Frankfurt/Main 80(DE)**

(72) Erfinder: **Ritz, Jürgen, Dr.**
**Am Hipperich 68**
**D-6500 Mainz(DE)**

(72) Erfinder: **Fischer, Hannes, Dr.**
**Bachstrasse 22**
**D-6204 Taunusstein(DE)**

(72) Erfinder: **Plum, Helmut, Dr.**
**Nibelungenstrasse 3**
**D-6204 Taunusstein(DE)**

(54) **Verfahren zur Herstellung von härtbaren Copolymeren und deren Verwendung.**

(57) Verfahren zur Herstellung von härtbaren Copolymeren durch Polymerisation von ungesättigten Estern mit ungesättigten polymerisierbaren Monomeren, die keine freie COOH-Gruppe enthalten, wobei als ungesättigter Ester ein olefinisch ungesättigter OH-Gruppen enthaltender Diester verwendet wird, der durch Umsetzung von olefinisch ungesättigten Dicarbonsäuren bzw. deren Anhydriden mit einem mehrwertigen Alkohol und einer Monoepoxydverbindung in einer oder mehreren Stufen erhalten worden ist, dadurch gekennzeichnet, daß die Copolymerisation der Diester mit Monomeren, die keine freien COOH-Gruppen enthalten in Anwesenheit eines Anteils solcher copolymerisierbarer Monomeren durchgeführt wird, die eine freie COOH-Gruppe enthalten und Verwendung der Copolymeren als härtbare Bindemittel für Lacke und/oder Überzüge.

EP 0 046 561 A2

Croydon Printing Company Ltd.

# Verfahren zur Herstellung von härtbaren Copolymeren und deren Verwendung

In der DE-OS 24 10 512 wird die Umsetzung einer ungesättigten Dicarbonsäure, z.B. Maleinsäure, mit einem mehrwertigen Alkohol, z.B. einem Diol oder Triol, und in zweiter Stufe die weitere Umsetzung des Zwischenprodukts mit einer Epoxydverbindung in Form eines Glycidylesters, Glycidyläthers oder Alkylenoxyd beschrieben. Die in zweiter Stufe erhaltenen niedermolekularen Verbindungen lassen sich nach Vermischen mit einem Aminharz bei erhöhter Temperatur, z.B. 30 Minuten bei 120 bis 180°C, härten und auf diese Weise zu Überzügen verarbeiten. Eine Vernetzung dieser Produkte bei Raumtemperatur ist wegen des zu niedrigen Molekulargewichtes der zu härtenden Produkte nicht möglich. Es wird nur eine Wärmehärtung vorgesehen. Aus diesem Grund ist der Anwendungsbereich dieser Bindemittel beschränkt. Es war daher erwünscht, den Anwendungsbereich von derartigen Bindemitteln für Überzüge zu erweitern.

Es wurde schon ein Verfahren zur Herstellung von härtbaren Copolymeren durch Polymerisation von ungesättigten Estern mit ungesättigten Monomeren, die keine freie COOH-Gruppe enthalten vorgeschlagen, wobei als ungesättigter Ester ein olefinisch ungesättigter, OH-Gruppen enthaltender Diester verwendet wird, der in einer vorhergehenden ersten Stufe durch Umsetzen einer olefinisch ungesätigten Dicarbonsäure bzw. deren Anhydrid mit einem mehrwertigen Alkohol unter Bildung eines Halbesters mit freien OH-Gruppen und weiterem Umsetzen des Halbesters in einer zweiten Stufe mit einer Monoepoxydverbindung erhalten worden ist. Nach einer Abwandlung dieses Verfahrens kann der olefinisch ungesättigte, OH-Gruppen ent-

haltende Diester vorher in einer einzigen Stufe durch Umsetzung eines Anhydrids der olefinisch ungesättigten Dicarbonsäure, eines mehrwertigen Alkohols und einer Monoepoxydverbindung hergestellt werden. Die nach den beiden Ausführungsformen erhaltenen härtbaren Reaktionsprodukte werden isoliert und/oder als härtbare Bindemittel für Lacke und/oder Überzüge verwendet, wobei sie unter Einwirkung eines Härtungsmittels gehärtet werden. Diese Verfahren und die danach hergestellten Produkte haben sich gut bewährt. Es war jedoch erwünscht, das Verfahren noch vorteilhafter zu gestalten.

Gegenstand der Erfindung ist das im Patentanspruch 1 genannte Verfahren, bei dem die Copolymerisation der Diester mit Monomeren, die keine freien COOH-Gruppen enthalten, in Anwesenheit eines Anteils solcher copolymerisierbarer Monomeren durchgeführt wird, die eine freie COOH-Gruppe enthalten **und deren Verwendung.**

Durch die erfindungsgemäße Copolymerisation mit den COOH-Gruppen enthaltenden Monomeren ist es nunmehr möglich, Produkte mit erhöhter Funktionalität zu erhalten, die eine verbesserte Trocknung aufweisen.

Der bei der Copolymerisation eingesetzte,olefinisch ungesättigte OH-Gruppen enthaltende Diester kann in einer 2-Stufen-Reaktion d.h. Veresterung der Dicarbonsäurederivate mit mehrwertigen Alkoholen und anschließender Umsetzung mit Epoxydverbindungen, oder in einer einzigen Stufe durch Umsetzung eines Anhydrids der olefinisch ungesättigten Dicarbonsäure, eines mehrwertigen Alkohols und einer Monoepoxydverbindung erhalten werden. Ferner kann nach einer besonderen Ausführungsform des vorliegenden Verfahrens das den OH-Gruppen aufweisenden Diester enthaltende Reaktionsgemisch ohne vorherige Isolierung des Diesters mit einem unter den Reaktionsbedingungen inerten organischen Lösungsmittel versetzt und dann auf

die gewünschte Polymerisationstemperatur gebracht werden, worauf das Gemisch in mindestens einer weiteren Stufe mit ungesättigten Monomeren unter Zusatz von Polymerisationsinitiatoren und gegebenenfalls Kettenabbrechern copolymerisiert wird. Dadurch ergibt sich der Vorteil einer wesentlichen Vereinfachung des Verfahrens, wobei gleichzeitig eine Arbeits- und Energieersparnis erzielt wird.

Bei der Bildung der Diester in einer Stufe liegt die Temperatur im allgemeinen bei 50 bis 200, vorzugsweise 100 bis 170°C.

Beim zweistufigen Verfahren wird die Herstellung des Halbesters in erster Stufe auf übliche Weise durchgeführt. Die Umsetzung des Halbesters in zweiter Stufe erfolgt zweckmäßig bei 100 bis 170, vorzugsweise 120 bis 155°C und im allgemeinen mit äquivalenten Mengen der Monoepoxydverbindung, weil dadurch die Reaktion besonders glatt verläuft; die Epoxydgruppen werden hierbei aufgespalten unter Bildung einer Estergruppe - und gegebenenfalls in geringem Umfang einer Äthergruppe - mit freien OH-Gruppen. Auf diese Weise erhält man einen Mischester der ursprünglich eingesetzten Dicarbonsäure, dessen eine Estergruppe freie OH-Gruppen von der mehrwertigen Alkoholkomponente und dessen andere Estergruppe freie OH-Gruppen von der Epoxydkomponente aufweist. Diese freien OH-Gruppen spielen für die spätere Härtung des Copolymeren eine wesentliche Rolle.

Je nach den gewünschten Eigenschaften der Zwischenprodukte läßt sich das Molekulargewicht und damit die Viskosität der Endprodukte steuern. So ist es möglich, durch ein geeignetes Verhältnis der OH-Gruppen des Ausgangsalkohols zu den COOH-Äquivalenten der Ausgangssäure monomere oder auch oligomere polymerisierbare Zwischenprodukte zu erzielen.

Zur Herstellung des Diesters eignen sich als Dicarbonsäureanhydride z.B. die der Itacon-, Citracon-, Dimethylmaleinsäure und vorzugsweise das der Maleinsäure. Als Alkohole eignen sich z.B. die weiter unten genannten. Als Epoxydverbindungen seien z.B. genannt Alkylenoxyde, wie Äthylenoxyd, Propylenoxyd, Styroloxyd, Glycid, Glycidyläther von Phenolen, wie des Phenols, der Kresole oder des tert. Butylphenols, Glycidylester von gesättigten Carbonsäuren; vorzugsweise jedoch Glycidylester verzweigter Fettsäuren mit der allgemeinen Formel 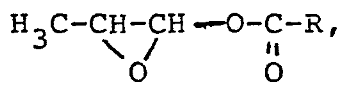 worin R der Rest einer in α-Stellung verzweigten Fettsäure mit 8 bis 16, vorzugsweise 10 bis 12 C-Atomen ist.

Das Molekulargewicht der Diester liegt im allgemeinen im Bereich von 250 bis 1500, vorzugsweise 400 bis 1250. Je nach dem gewünschten Endprodukte bzw. dem Anteil der Monomeren mit freien COOH-Gruppen liegt die OH-Zahl der Diester im allgemeinen im Bereich von 175 bis 550, vorzugsweise 280 bis 450.

Die Copolymerisation der Zwischenprodukte läßt sich in einer oder mehreren, vorzugsweise in zwei Stufen durchführen, und zwar im allgemeinen bei 80 bis 220, vorzugsweise 130 bis 170, insbesondere 140 bis 160°C, wobei gegebenenfalls auf die Mitverwendung von Lösungsmitteln verzichtet werden kann. Sie kann thermisch erfolgen. Vorzugsweise arbeitet man jedoch in Gegenwart von Katalysatoren, insbesondere radikalischen Initiatoren, vor allem Peroxyden, z.B. Di-tert.-butylperoxyd, Dibenzoylperoxyd, Cumylhydroperoxyd oder Azoverbindungen, wie Azo-bis-isobutyronitril oder dergleichen. Dabei ist die Gegenwart von Lösungs- oder Verdünnungsmitteln, die vorgelegt werden können, zweckmäßig. Geeignet sind als solche z.B. hochsiedende aliphatische und/oder aromatische Lösungsmittel mit einem Siedepunkt von 140 bis 185°C, wie Mineralöl mit einem Siedepunkt von 160 bis 180°C, Xylole, Butylacetat, Äthylenglykolacetatmonoäthyläther oder dergleichen. Gegebenenfalls kann die Copolymerisation zur Steuerung des Molekulargewichts auch in Gegenwart von Kettenabbrechern, z.B. Alkanthiolen wie n-Dodecylmercaptan durch geführt werden.

Geeignete copolymerisierbare Monomere mit freien COOH-Gruppen sind z.B. Acryl-, Methacrylsäure, Halbester von Maleinsäure, Fumarsäure oder Itaconsäure, in Mengen von im allgemeinen bis zu 10, vorzugsweise 1 - 3 Gew.-%, bezogen auf die gesamten copolymerisierbaren Komponenten. Copolymerisierbare Monomere ohne freie COOH-Gruppe sind beispielsweise aromatische Vinylverbindungen, wie Styrol, α -Methylstyrol, die verschiedenen Vinyltoluole, Acrylsäure- bzw. Methacrylsäureester von einwertigen Alkoholen mit 1 bis 6, vorzugsweise 1 bis 4 C-Atomen, wie Methyl-, Äthyl-, n- oder iso-Propyl-, n-, sec-, iso- oder tert.-Butyl-, die verschiedenen Pentyl- und Hexylacrylate bzw. -methacrylate, ferner die entsprechenden Monoester von zweiwertigen Alkoholen mit bis zu 6 C-Atomen, vorzugsweise solchen mit vicinalen OH-Gruppen, wie Hydroxyäthyl- und Hydroxypropylacrylat bzw. -methacrylat. Falls die Copolymerisation mit einem Monomerengemisch durchgeführt wird, enthält dieses Gemisch zweckmäßig mindestens 10 Mol-% aromatische Vinylverbindungen, vorzugsweise Styrol und/oder höchstens 20, vorzugsweise höchstens 10 Gew.-%, bezogen auf das gesamte Monomerengemisch,

Hydroxyalkylester. Im allgemeinen beträgt der maximale Gehalt an aromatischen Vinylverbindungen etwa 50 Gew.-%.

Geeignete mehrwertige Alkohole zur Herstellung der Halbester sind dieselben, die auch in den Acryl- bzw. Methacrylsäureestern enthalten sind, z.B. Diole, wie Äthylenglykol, Propandiol-1,2, Propandiol-1,3, die verschiedenen Butandiole, wie Butandiol-1,4, ferner Pentan- und Hexandiole, wie Hexandiol-1,6, Neopentylglykol, Diäthylenglykol, Dipropylenglykol und Triole, wie Trimethyloläthan oder -propan. Es können auch Umsetzungsprodukte von mehrwertigen Alkoholen, wie Glycerin, Trimethyloläthan und -propan, Pentaerythrit, Dipentaerythrit und Isocyanatverbindungen oder Carbonsäuren, z.B. Pentaerythrit-diester mit Monocarbonsäuren, eingesetzt werden, solange sie mindestens zwei freie OH-Gruppen pro Molekül enthalten.

Die Copolymerisation führt man zweckmäßig so lange durch, bis ein Umsatz von mindestens 95 %, vorzugsweise mindestens 98 % erreicht ist. Die Säurezahl der Copolymeren kann z.B. 2 bis 10, vorzugsweise 5 bis 40 und die OH-Zahl z.B. 20 bis 280, vorzugsweise 50 bis 200 betragen.

Eine bevorzugte Ausführung des erfindungsgemäßen Verfahrens sieht vor, daß ein Copolymeres hergestellt wird aus

A) 20 bis 50 Gew.-% mindestens eines Dicarbonsäureesters, vorzugsweise auf der Basis von Maleinsäureanhydrid, Trimethylolpropan und einem Glycidylester einer verzweigten Fettsäure mit 8 - 16, vorzugsweise 10 bis 12 C-Atomen,

B) 5 bis 50 Gew.-% mindestens eines Acryl- und/oder Methacrylsäureesters mit einwertigen Alkoholresten mit 1 bis 6, vorzugsweise 1 bis 4 C-Atomen,

C) 10 bis 50 Gew.-% Styrol,

D) 1 bis 3 Gew.-% Acrylsäure und

E) 0 bis 20 Gew.-% mindestens eines Esters der Acrylsäure- oder Methacrylsäure mit einem zweiwertigen Alkohol mit bis zu 6 C-Atomen,

wobei die Summe A - E stets 100 Gew.-% beträgt.

Im Rahmen der Erfindung liegt auch die Härtung des Copolymerisats, für die verschiedene Härtungsmittel verwendet werden können, z.B. verkappte oder freie Polyisocyanate, Polycarbonsäuren, vorzugsweise in Form von Anhydriden, Aminharze oder Phenolharze. Als Polyisocyanate seien z.B. genannt zwei- bis vierwertige Isocyanate, wie Toluylendiisocyanate, Isophorondiisocyanat, Hexamethylendiisocyanat, 2,4,6-Triisocyanato-tolzol, 4,4'-4''-Triisocyanato-triphenylmethan, 2,4,4'-Triisocyanato-diphenylmethan, 2,2',5,5'-Tetraisocyanato-diphenylmethan, ferner dreiwertige Isocyanate, die beispielsweise durch Addition von Trimethylolpropan an Toluylen-diisocyanat zugänglich sind, ein durch Umsetzung von Hexamethylendiisocyanat und Wasser herstellbares Triisocyanat oder Isocyanate mit bis zu vier freien Isocyanatgruppen, wie sie z.B. durch Umsetzung von Toluylen-diisocyanat und Hexamethylendiisocyanat herstellbar sind bzw. deren Verkappungsprodukte mit z.B. Acetessigsäureestern, z.B. des Methanols, Äthanols, der Propanole, bzw. Butanole, oder mit $\varepsilon$-Caprolactam.

Als Polycarbonsäurehärter kommen z.B. in Frage Maleinsäure, Bernsteinsäure, Adipinsäure, Phthalsäure, Trimellithsäure, Pyromellithsäure oder Anhydride dieser Säuren, ferner niedermolekulare oligomere Ester oder Polyester mit freien COOH-Gruppen. Gegebenenfalls kann auch zusätzlich ein Katalysator zugegen sein, vorzugsweise organische Metallverbindungen, wie Dibutylzinndilaurat, Dibutylzinnoxyd, Kobaltnaphthenat oder

-octoat, oder Amine, wie Äthylendiamin und dessen Homologe, wie Diäthylentriamin, Tetraäthylenpentamin, tertiäre Amine, wie Triäthylamin, Tributylamin, Dimethylanilin, vorzugsweise jedoch Alkanolamine, wie Diäthyläthanolamin.

Statt einzelner Komponenten können in allen Fällen auch Gemische eingesetzt werden.

Die Härtung, insbesondere mit Polyisocyanaten,kann bereits bei Raumtemperatur erfolgen. Bei erhöhter Temperatur lassen sich vorwiegend die anderen der oben genannten Härter einschließlich verkappten Isocyanaten einsetzen, wobei die Amin- und Phenolharze z. B. auch in Gegenwart von Säuren, wie Toluolsulfonsäure als Härter wirken können. Im allgemeinen verläuft die Wärmehärtung innerhalb von 10 bis 30 Minuten bei 120 bis 200°C. Gerade bei der Verwendung von Isocyanaten kann der Zusatz von Katalysatoren, z. B. organischen Metallverbindungen, wie Dibutylzinndilaurat und/oder Aminen, wie tertiäres Alkanolamin, z. B.Diäthyläthanolamin, von Interesse sein.

Das härtbare Bindemittel kann außerdem mit üblichen Pigmenten, Füll- und/oder Zusatzstoffen kombiniert werden.

Auch wenn die erfindungsgemäß erhaltenen Produkte nur einen untergeordneten oder überhaupt keinen Anteil an Hydroxyalkylestern ungesättigter Säuren aufweisen, erhält man nach ihrer Härtung mit den geeigneten Härtern gehärtete Überzüge, die den bisher bekannten Überzügen auf der Basis von Acrylatharzen, die Hydroxyalkylester enthalten, zumindest gleichwertig sind, im allgemeinen jedoch überraschenderweise bessere lacktechnische Eigenschaften aufweisen. Durch die größere Variationsmöglichkeit und Auswahl an Reaktionspartnern bei der Herstellung der Copolymeren ermöglicht die vorliegende Erfindung die Auswahl optimaler Systeme für den jeweils gewünschten

Zweck. Außerdem wird die Löslichkeit der Polymeren durch den Einbau der Gruppen von ungesättigten Dicarbonsäuren, wie Maleinsäureester, in den Acrylate enthaltenden Systemen verbessert. Dadurch lassen sich Lösungsmittel enthaltende Systeme mit einem höheren Festkörpergehalt als mit den bisherigen Acrylatharzen, also umweltfreundlichere Systeme, herstellen.

Die erfindungsgemäß erhaltenen Produkte lassen sich für Anstrichmittel und/oder Überzüge für Aus- und Verkleidungen, beispielsweise auch als Korrosionsschutz für verschiedene Gegenstände, insbesondere solche, die atmosphärischen Einflüssen ausgesetzt sind, wie Bauwerke, Fahrzeuge und deren Teile, z. B. Karosserien, für Haushaltsgeräte und elektrotechnische Einrichtungen und deren Bauteile verwenden. Sie weisen eine gute Haftung auf Unterlagen aus Kunststoff und Metallen, wie Kupfer, Messing, Zink und Eisenlegierungen auf. Außerdem zeigen sie beim Auftragen als Überzüge einen guten Verlauf. Die gehärteten Überzüge zeichnen sich durch hohen Glanz, gute Elastizität, sehr gute Wetterbeständigkeit und Farbstabilität aus. Die bei Raumtemperatur härtbaren erfindungsgemäß erhaltenen Produkte eignen sich besonders zum Beschichten von Baustoffen, vorzugsweise Fußböden, z. B. solchen auf Basis von Zement und Beton. Ferner eignen sich die erfindungsgemäß erhaltenen Produkte zur Verwendung für Klebstoffe, wobei sich ihre gute Löslichkeit und ein dadurch bedingter erhöhter Festkörpergehalt vorteilhaft bemerkbar machen.

In den nachstehenden Beispielen bedeutet jeweils % = Gew.-% und T = Gew.-Teile. Die Säurezahl (SZ) und die Hydroxylzahl (OHZ) wurden jeweils in mg KOH Festharz und der Festkörpergehalt nach 1 Stunde Trocknens auf 125°C bestimmt.

## Beispiele

### 1a) Herstellung eines Mischesters

In einem Reaktionsgefäß werden 134 T Trimethylolpropan, 98 T Maleinsäureanhydrid und 245 T Glycidylester einer in α-Stellung verzweigten Carbonsäure mit 10 C-Atomen unter Rühren auf 100°C erwärmt. Nach kurzer Zeit steigt die Innentemperatur auf 140°C, fällt jedoch nach ca. 30 Min. wieder ab. Die SZ ist dann $<$20. Kennzahlen des Maleinsäuremischesters: SZ 15, OHZ 350 - 360.

### 1b) Copolymerisation

Polymerisat A: Zu 67 T Äthylenglykolmonoäthylätheracetat wird bei 150°C unter Rühren zuerst eine Mischung aus 38,0 T des unter a) hergestellten Maleinsäuremischesters, 26,2 T Styrol, 0,5 T Di-tert-butylperoxid und 0,3 T Dodecylmercaptan innerhalb 3 Stunden und dann eine Mischung aus 4,4 T Hydroxyäthylmethacrylat, 1,2 T Acrylsäure, 20,7 T Methylmethacrylat, 7,9 T Styrol, 0,5 T Di-tert-butylperoxid und 0,3 T Dodecylmercaptan ebenfalls innerhalb 3 Stunden gleichmäßig zudosiert. Anschließend wird 2 Stunden bei 150°C nachpolymerisiert. Kennzeichen des Copolymerisats: SZ 17, OHZ 150, Festkörpergehalt 58,6 %, Viskosität (in Xylol 50%ig) 420 mPa.s.

Polymerisat B: 17 T alkylaromatisches Mineralöl (Siedebereich 160 bis 165°C), 17 T Butylacetat und 34 T Xylol werden auf 135 - 140°C erhitzt. Bei dieser Temperatur wird unter Rühren zuerst eine Mischung aus 37,9 T des unter 1a) hergestellten Maleinsäuremischesters, 26,2 T Styrol, 0,5 T

Di-tert-butylperoxid und 0,3 T Dodexylmercaptan innerhalb 3 Stunden und dann eine Mischung aus 4,4 T Hydroxyäthylmethacrylat, 1,2 T Acrylsäure, 8,0 T Styrol, 20,7 T Methylmethacrylat, 0,5 T Di-tert-butylperoxid und 0,3 T Dodecylmercaptan ebenfalls innerhalb 3 Std. gleichmäßig zudosiert. Anschließend wird 2 Std. nachpolymerisiert. Kennzahlen des Copolymerisats: SZ 17, OHZ 155, Festkörpergehalt 59,8 %, Viskosität (in Xylol 50%ig) 1825 mPa.s.

2) Polymerisate C, D und E: Maleinsäureanhydrid, Trimethylolpropan und der Glycidylester einer in $\alpha$-Stellung verzweigten Carbonsäure mit 10 C-Atomen werden unter Rühren auf 100°C erhitzt. Nach kurzer Zeit steigt die Innentemperatur auf 140°C, fällt jedoch nach ca. 30 min. wieder ab. Die SZ der Reaktionsmischung ist dann $< 20$. Man versetzt mit Äthylenglykolmonoäthylätheracetat und erwärmt auf 150°C.

Bei dieser Temperatur wird zuerst eine Mischung aus Styrol, Initiator und gegebenenfalls Regler innerhalb 3 Stunden und dann eine Mischung aus einem oder mehreren (Meth)acrylsäureestern, Styrol, (Meth)acrylsäure, Initiator und gegebenenfalls Regler innerhalb 3 Stunden gleichmäßig anteilweise zugegeben. Man läßt noch 2 Stunden nachpolymerisieren.

Die Ansätze in Gewichtsteilen und die Kennzahlen der Produkte sind aus der nachstehenden Tabelle ersichtlich.

| | C | D | E |
|---|---|---|---|
| Maleinsäureanhydrid | 4,7 | 4,0 | 3,4 |
| Trimethylolpropan | 6,4 | 5,5 | 4,6 |
| Glycidylester | 11,7 | 10,0 | 8,4 |
| Äthylenglykolmonoäthyläther | 40,0 | 40,0 | 40,0 |
| Styrol | 15,7 | 15,6 | 16,1 |
| Di-tert-butylperoxid | 0,3 | 0,3 | 0,3 |
| Dodecylmercaptan | 0,2 | 0,3 | - |
| Hydroxyäthylmethacrylat | 2,7 | 5,3 | 5,6 |
| Methylmethacrylat | 12,4 | 13,0 | 15,7 |
| Acrylsäure | 0,7 | 0,7 | 0,7 |
| Styrol | 4,7 | 4,7 | 4,9 |
| Di-tert-butylperoxid | 0,3 | 0,3 | 0,3 |
| Dodecylmercaptan | 0,2 | 0,3 | - |
| SZ | 19 | 19 | 17 |
| OHZ | 155 | 150 | 140 |
| Festkörpergehalt % | 59,0 | 58,8 | 60,1 |
| Viskosität (in Xylol 50%ig) mPa.s | 260 | 280 | 370 |

Herstellung der Lacke

Aus den Copolymerisat-Lösungen wurden entsprechend den nachfolgenden Formulierungen Lacke angefertigt:

| | A | B | C | D | E |
|---|---|---|---|---|---|
| Copolymerisat-Lösung | 71,40 | 70,77 | 70,77 | 71,38 | 72,80 |
| Dibutylzinndilaurat (In Xylol 1%ig) | o,23 | o.23 | o,23 | o,23 | 0,23 |
| Diäthyläthanolamin | 0,37 | 0,37 | 0,37 | 0,37 | 0,37 |
| Siliconöl (in Xylol 1%ig) | 0,94 | 0,94 | 0,94 | 0,94 | 0,94 |
| Umsetzungsprodukt aus Hexamethylendiisocyanat u. Wasser, 75%ig in Äthylenglykolmonoäthylätheracetat | 27,06 | 27,69 | 27,69 | 27,08 | 25,66 |

Die Polymerlösungen werden mit einem Lösungsmittelgemisch aus Xylol, einem aromatischen Kohlenwasserstoffgemisch (Siedebereich 165 - 175°C), Butylacetat und Äthylenglykolmonoäthylätheracetat (Gewichtsverhältnis 40 : 25 : 20 : 15) auf eine Viskosität von 45 s (DIN 53211/20°C) eingestellt und dann in einer Naßschichtdicke von 100µ auf Glasplatten und Stahlbleche aufgezogen. Die Filme werden bei Raumtemperatur an der Luft getrocknet.

Lacktechnische Prüfung

Die Prüfergebnisse sind der nachstehenden Tabelle zu entnehmen:

| | A | B | C | D | E |
|---|---|---|---|---|---|
| Staubtrocken min | 26 | 21 | 22 | 20 | 18 |
| Klebfrei-trocken min | 110 | 90 | 130 | 120 | 70 |

| | A | B | C | D | E |
|---|---|---|---|---|---|
| Pendelhärte s nach König DIN 53157 nach 27 h | 82 | 85 | 74 | 75 | 90 |
| Erichsentiefung (mm) DIN 53156 nach 10 Tagen | 8,8 | 9,0 | 9,2 | 9,o | 8,7 |
| Benzinbeständigkeit min nach 10 Tagen | >30 | >30 | >30 | >30 | >30 |
| Festkörpergehalt ./. | 54,8 | 50,4 | 58,3 | 56,7 | 54,8 |

Diskussion der Ergebnisse

Aus vorstehender Tabelle ist die rasche Trocknung bei relativ hohem Festkörpergehalt der Produkte ersichtlich.

0046561

## ERKLÄRUNG

Mit Schreiben vom 1. September 1981 beim Europäischen Patentamt am 3. September 1981 eingegangen, wurden vom Anmelder HOECHST AG, gemäss Regel 88 EPÜ, die nachfolgenden Berichtigungen in der Beschreibung beantragt :

Seite 2, Zeile 18 : "die Verwendung solcher Copolymerisate"
anstatt : "deren Verwendung"

Seite 2, Zeile 27 : "Dicarbonsäuren bzw. der Anhydride"
anstatt : "Dicarbonsäurederivate"

Seite 3, Zeile 18 : der Halbsatz ",.........weil dadurch ......verlauft"
ist zu streichen.

Seite 3a,Zeile 10 : der linke Teil der Formel muss richtig lauten :
"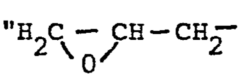"

Seite 5, Zeile 22 : "2 bis 100"
anstatt : "2 bis 10"

Dem Berichtigungsantrag gem. R. 88 EPÜ wird
/ ~~mit Ausnahme der gestrichene Punkte~~ /
stattgegeben.
DEN HAAG, den
EINGANGSSTELLE

R. KRAANEN
13 OCT. 1981

PATENTANSPRÜCHE

1. Verfahren zur Herstellung von härtbaren Copolymeren durch Polymerisation von ungesättigten Estern mit ungesättigten polymerisierbaren Monomeren, die keine freie COOH-Gruppe enthalten, wobei als ungesättigter Ester ein olefinisch ungesättigter OH-Gruppen enthaltender Diester verwendet wird, der durch Umsetzung von olefinisch ungesättigten Dicarbonsäuren bzw. deren Anhydriden mit einem mehrwertigen Alkohol und einer Monoepoxydverbindung in einer oder mehreren Stufen erhalten worden ist, dadurch gekennzeichnet, daß die Copolymerisation der Diester mit Monomeren, die keine freien COOH-Gruppen enthalten in Anwesenheit eines Anteils solcher copolymerisierbarer Monomeren durchgeführt wird, die eine freie COOH-Gruppe enthalten.

2. Verfahren nach Anspruch 1, dadurch gekennzeichnet, daß bis zu 10 Gew.-% COOH-Gruppen enthaltende copolymerisierbare Monomere, bezogen auf die gesamten copolymerisierbaren Komponenten, enthalten sind.

3. Verfahren nach Anspruch 1 oder 2, dadurch gekennzeichnet, daß der olefinisch ungesättigte, OH-Gruppen enthaltende Diester in einer einzigen Stufe durch Umsetzung eines Anhydrids der olefinisch ungesättigten Dicarbonsäure, eines mehrwertigen Alkohols und einer Monoepoxydverbindung erhalten wird.

4. Verfahren nach einem oder mehreren der Ansprüche 1 bis 3, dadurch gekennzeichnet, daß ein Copolymeres aus

A) 20 bis 50 Gew.-% mindestens eines Dicarbonsäureesters, vorzugsweise auf der Basis von Maleinsäureanhydrid, Trimethylolpropan und einem Glycidylester einer verzweigten Fettsäure mit 8 bis 16, vorzugsweise 10 bis 12 C-Atomen,

B) 5 bis 50 Gew.-% mindestens eines Acryl- und/oder Methacrylsäureesters von einwertigen Alkoholen mit 1 bis 6, vorzugsweise 1 bis 4 C-Atomen,

C) 10 bis 50 Gew.-% Styrol,

D) 1 bis 3 Gew.-% Acrylsäure und

E) 0 bis 20 Gew.-% mindestens eines Esters der Acrylsäure oder Methacrylsäure von einem zweiwertigen Alkohol mit bis zu 6 C-Atomen,

wobei die Summe A - E stets 100 Gew.-% beträgt, hergestellt wird.

5. Verfahren nach einem oder mehreren der Ansprüche 1 bis 4, dadurch gekennzeichnet, daß die Polymerisation mit einem Monomerengemisch durchgeführt wird, das höchstens 10 Gew.-% Hydroxyalkylester enthält.

6. Verfahren nach einem oder mehreren der Ansprüche 1 bis 5, dadurch gekennzeichnet, daß die Polymerisation so geführt wird, daß die Säurezahl der Copolymere 2 bis 100, vorzugsweise 5 bis 40 und die Hydroxylzahl 20 bis 280 vorzugsweise 50 bis 200 beträgt.

7. Verwendung der nach dem Verfahren gemäß einem oder mehreren der Ansprüche 1 bis 6 hergestellten Copolymeren als härtbare Bindemittel für Lacke und/oder Überzüge.

8. Verwendung der Copolymeren nach Anspruch 7 zusammen mit als Härter wirkenden Polyisocyanaten.

9. Verwendung des Copolymeren nach Anspruch 7 oder 8 zusammen mit Katalysatoren, vorzugsweise organischen Metallverbindungen und/oder Aminen.